(19) **Europäisches Patentamt**
**European Patent Office**
**Office européen des brevets**

(11) **EP 4 621 719 A1**

(12) **EUROPEAN PATENT APPLICATION**
published in accordance with Art. 153(4) EPC

(43) Date of publication:
**24.09.2025 Bulletin 2025/39**

(21) Application number: **23891175.4**

(22) Date of filing: **26.09.2023**

(51) International Patent Classification (IPC):
***G06T 13/20*** (2011.01)      ***G06T 13/40*** (2011.01)
***G06T 17/20*** (2006.01)

(52) Cooperative Patent Classification (CPC):
**G06T 13/20; G06T 13/40; G06T 17/20**

(86) International application number:
**PCT/JP2023/034987**

(87) International publication number:
**WO 2024/106017 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 JP 2022184165**

(71) Applicant: **CANON KABUSHIKI KAISHA Tokyo 146-8501 (JP)**

(72) Inventor: **YOSHIDA Yuto Tokyo 146-8501 (JP)**

(74) Representative: **TBK Bavariaring 4-6 80336 München (DE)**

(54) **IMAGE PROCESSING DEVICE, IMAGE PROCESSING METHOD, AND PROGRAM**

(57)     High-speed tracking processing on a large number of objects is achieved. Time-series shape data composed of a frame group in which each of frames contains 3D models representing three-dimensional shapes of a plurality of objects, respectively, is obtained. Then, tracking processing is conducted for each object based on correspondence relation information contained in the obtained time-series shape data.

START

↓

OBTAIN TIME-SERIES MESH DATA AND CORRESPONDENCE RELATION INFORMATION — S301

↓

TRACKING PROCESSING FOR EACH OBJECT — S302

↓

OUTPUT TRACKED TIME-SERIES MESH DATA AND TRACK INFORMATION — S303

↓

END

**FIG.3**

EP 4 621 719 A1

**Description**

Technical Field

The present disclosure relates to a tracking technology for three-dimensional shape data of an object.

Background Art

In recent years, in the field of video creation, a volumetric video technology which reconstructs data (generally called a "3D model") representing a three-dimensional shape of an object in a three-dimensional space, and visualizes the data from free viewpoints while adding rendition with CG has been becoming common. Here, as preprocessing for data compression in the case of transferring data of a 3D model to a volumetric video generating device or the like, tracking processing is conducted on the 3D model. This tracking processing is a technology which associates each component of a three-dimensional shape represented by a 3D model between frames in a series of frame groups composing a video.

Citation List

Patent Literature

PTL 1: Japanese Patent Laid-Open No. 2019-036288
PTL 2: US2017/0024930

Summary of Invention

Technical Problem

In the case of tracking processing on a 3D model in a mesh format, for example, a common topology is maintained in a tracking range. Here, as the number of target objects for tracking processing increases, the number of vertices of polygons increases, so that the calculation amount exponentially increases. Hence, as the number of objects increases, it has been difficult to complete the tracking processing within a desired time.
The present disclosure has been made to solve the above-mentioned problem, and an object thereof is to achieve high-speed tracking processing on a large number of objects. Solution to Problem
An image processing apparatus according to the present disclosure comprises: an obtaining unit which obtains time-series shape data composed of a frame group in which each of frames contains 3D models representing three-dimensional shapes of a plurality of object, respectively; a tracking unit which conducts tracking processing on the time-series shape data for each object based on correspondence relation information contained in the time-series shape data; and an output unit which outputs tracked time-series shape data processed by the tracking unit while adding metadata to the tracked time-series shape data, wherein the correspondence relation information is identification information with which an object associated with the 3D model in each frame can be identified, and the metadata is data in which a track indicating a frame section in which a component of the 3D model is tracked between frames in the tracked time-series shape data and the identification information of the object are associated with each other.

Advantageous Effects of Invention

The present disclosure makes it possible to conduct tracking processing on a large number of objects at high speed.

Brief Description of Drawings

[Fig. 1] Fig. 1 is a functional block diagram showing a logical configuration (a software configuration) of an image processing apparatus according to Embodiment 1.

[Fig. 2] Fig. 2 is a block diagram showing a hardware configuration of the image processing apparatus according to Embodiment 1.

[Fig. 3] Fig. 3 is a flowchart showing a flow of tracking processing according to Embodiment 1.

[Fig. 4] Figs. 4(a) and (b) are diagrams for explaining the tracking processing of Embodiment 1.

[Fig. 5] Fig. 5 is a flowchart showing a detail of the tracking processing for each object.

[Fig. 6] Fig. 6 is a schematic diagram showing how the tracking processing is applied to a continuous mesh model of a certain object.

[Fig. 7] Fig. 7 is an example of a table as track information.

[Fig. 8] Fig. 8 is a functional block diagram showing a logical configuration (a software configuration) of an image processing apparatus according to Embodiment 2.

[Fig. 9] Fig. 9 is a flowchart showing a flow of tracking processing according to Embodiment 2.

[Fig. 10] Figs. 10(a) to (c) are diagrams for explaining the tracking processing of Embodiment 2.

[Fig. 11] Fig. 11 is a diagram showing a relation between GOF and tracks in track information.

[Fig. 12] Figs. 12(a) to (c) are diagrams for explaining tracking processing of a modification of Embodiment 2.

[Fig. 13] Fig. 13 is an example of track information according to Embodiment 3.

[Fig. 14] Fig. 14 is a flowchart showing a flow of tracking processing according to Embodiment 3.

[Fig. 15] Figs. 15(a) to (e) are diagrams for explaining the tracking processing of Embodiment 3.

[Fig. 16] Fig. 16 is a flowchart showing a detail of track dividing processing according to Embodiment 3.

[Fig. 17] Fig. 17 is diagrams for explaining how a frame position for which a sum of deformation errors of both tracks is minimized is selected.

[Fig. 18] Fig. 18 is a flowchart showing a flow of tracking processing according to Embodiment 4.

[Fig. 19] Figs. 19(a) and (b) are diagrams for explaining the tracking processing of Embodiment 4.

[Fig. 20] Figs. 20(a) to (c) are explanatory diagrams in the case where there is an increase or decrease of the number of meshes.

Description of Embodiments

Hereinafter, embodiments of the present disclosure will be described in detail with reference to the attached drawings. Note that configurations shown in the following embodiments are mere examples, and the scope of the present disclosure is not limited to only these configurations.

(Identification of Problem)

Before the description of Embodiments is started, the problem to be solved by the present disclosure is identified. As mentioned above, for example, in the case of tracking processing on a 3D model in the mesh format, a common topology is maintained in a tracking range (a frame section in which vertices of a polygon are tracked between frames, which is generally called a "track"). For example, the case of conducting tracking processing on a base mesh having the number of vertices $N_b$ to a target mesh having the number of vertices $N_t$ is considered. In this case, in the case where non-rigid registration between vertices is conducted by the ICP method (Iterative Closest Point method), it becomes necessary to repeat nearest neighbor point search and minimization processing of a cost function. The nearest neighbor search requires a calculation of $O(N_b N_t)$ in the case of all exhaustive search, and the minimization processing of the cost function requires to solve a simultaneous linear equation of a matrix of $3N_b \times 3N_b$, and requires a calculation of $O(N_b{}^2)/2$ in the case where the LU decomposition method is utilized. Hence, as the number of vertices increases, more calculations are required. For this reason, as the number of target objects for tracking processing increases, the calculation amount exponentially increases, and exceeds the capacity of processing. This is the problem to be solved by the present disclosure.

(Definition of Terms)

In the present Description, "object" means a three-dimensional object such as a person. In addition, "point" means an element in expressing a three-dimensional shape of an object, which is indicated by a set of coordinates in a three-dimensional space, and "point cloud format" indicates a data format of 3D models which expresses a surface position of an object by means of a group of one or more points. In addition, "polygon" means a polygonal surface having three or more points as vertices, and "mesh format" indicates a data format of a 3D model which expresses a surface shape of an object with a group of polygons.

[Embodiment 1]

In the present embodiment, described is a mode in which data of a frame group in which frames arranged in time series contain a plurality of 3D models representing the respective three-dimensional shapes of a plurality of objects is obtained, and tracking processing is conducted upon dividing the data for each object. Note that the data composed of a frame group in which frames contain 3D models corresponding respectively to a plurality of objects is called "time-series shape data" below, and among these, data in which 3D models are represented in a mesh format is called "time-series mesh data". That is, time-series mesh data is assemblage data in which 3D models in the mesh format, which represent the three-dimensional shapes of the objects, obtained by measuring the objects with time, are arranged in time series on a frame basis.

<Logical Configuration of Image Processing Device>

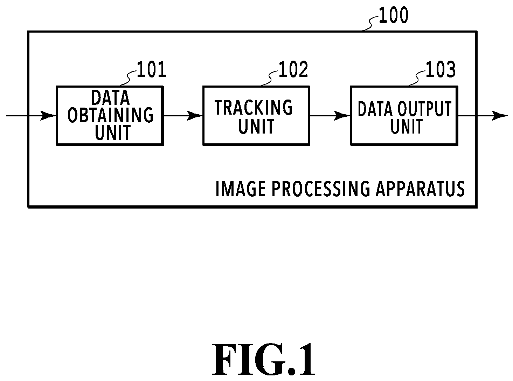

Fig. 1 is a functional block diagram showing a logical configuration (a software configuration) of an image processing apparatus according to the present embodiment. An image processing apparatus 100 includes a data obtaining unit 101, a tracking unit 102, and a data output unit 103. Hereinafter, each functional unit will be described.

The data obtaining unit 101 obtains time-series mesh data and correspondence relation information with which an object can be identified in the time-series mesh data. Here, the correspondence relation information is identification information (object ID) which is added to each individual mesh model and which allows an object corresponding to a 3D model in the mesh format (hereinafter, referred to as a "mesh model") contained in each frame to be identified. This correspondence relation information can be obtained by a method described in PTL 1, for example.

The tracking unit 102 conducts tracking processing on the time-series mesh data obtained by the data obtaining unit 101 for each object. In the case of tracking a mesh model between frames, a method in which vertices of a polygon, which is a component of a mesh, are tracked between the frames to commonize an index (vertex ID) of each vertex between the frames is employed (see PTL 2). By commonizing index information of a mesh between frames, textured mesh data can be expressed in the form of "keyframe+difference".

The data output unit 103 outputs tracked time-series mesh data for each object, which is a result of the tracking processing conducted by the tracking unit 102, and track information. Here, the track information is information indicating the detail of the tracks formed for each object in the tracking processing, and plays a role as metadata for the tracked time-series mesh data.

Each of the above-mentioned functional units is achieved by hardware included in the image processing apparatus 100, which will be described later.

<Hardware Configuration of Image Processing Device>

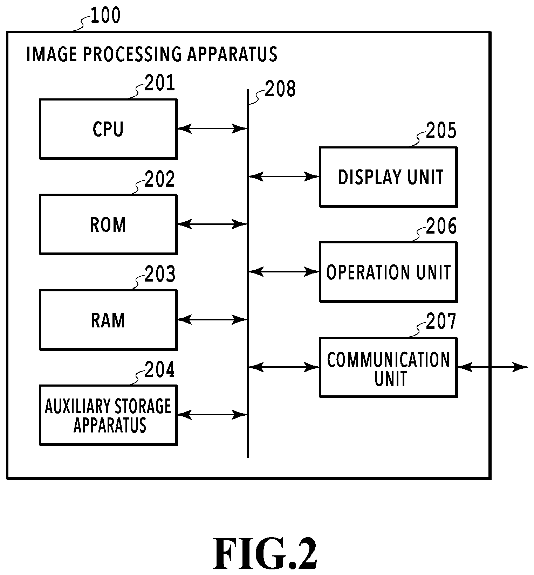

Fig. 2 is a block diagram showing a hardware configuration of the image processing apparatus according to the present embodiment. The image processing apparatus 100 includes a CPU 201, a ROM 202, a RAM 203, an auxiliary storage device 204, a display unit 205, an operation unit 206, a communication unit 207, and a bus 208 as shown as an example in Fig. 2, as hardware which a general computer includes.

The CPU 201 achieves each functional unit included in the image processing apparatus 100 shown in Fig. 1 by using programs or data stored in the ROM 202 or the RAM 203. Note that the image processing apparatus 100 may include one or a plurality of pieces of dedicated hardware that are different from the CPU 201 such that the dedicated hardware executes at least part of the processing conducted by the CPU 201. Examples of the dedicated hardware include ASIC, FPGA, DSP (digital signal processor), and the like. The ROM 202 stores programs and the like which do not need to be changed. The RAM 203 temporarily stores programs or data supplied from the auxiliary storage device 204, or data or the like supplied from the outside via the communication unit 207. The auxiliary storage device 204 is configured with, for example, a hard disk drive or the like, and stores various data such as image data or voice data.

The display unit 205 is configured with, for example, a liquid-crystal display, LED, or the like, and displays GUI (Graphical User Interface) or the like for the user to operate the image processing apparatus 100 or to browse necessary information. The operation unit 206 is configured with, for example, a keyboard, a mouse, a touch panel, or the like, and receives operation by the user to input various instructions into the CPU 201. The CPU 201 also operates as a display control unit for controlling the display unit 205 and an operation control unit for controlling the operation unit 206. The communication unit 207 is used to communicate with devices outside the image processing apparatus 100. For example, in the case where the image processing apparatus 100 is connected to an external device with a wire, a communication cable is connected to the communication unit 207. In the case where the image processing apparatus 100 has a function of wirelessly communicating with an external device, the communication unit 207 includes an antenna. The bus 208 connects each unit included in the image processing apparatus 100, and transmits information.

In the present embodiment, the display unit 205 and the operation unit 206 are described as being present inside the image processing apparatus 100, but at least one of the display unit 205 and the operation unit 206 may be present as a separate device outside the image processing apparatus 100.

<Operation of Image Processing Device 100>

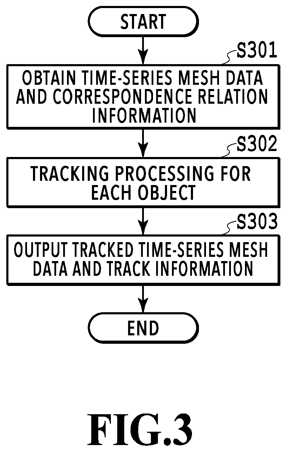

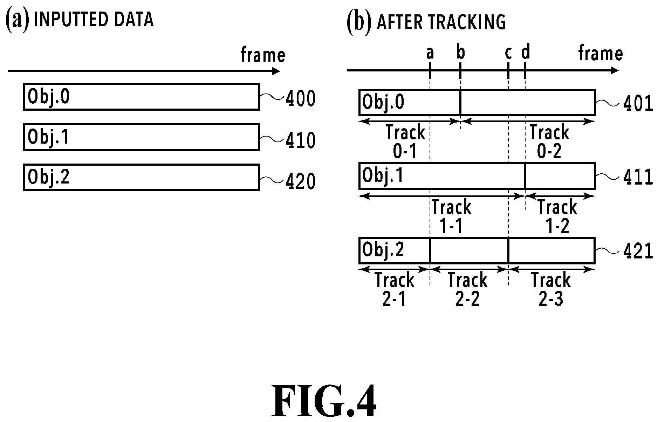

Fig. 3 is a flowchart showing a flow of the tracking processing according to the present embodiment. Figs. 4(a) and (b) are diagrams for explaining the tracking processing of the present embodiment. Hereinafter, the operation of the image processing apparatus 100 according to the present embodiment will be described with reference to Fig. 3 and Figs. 4. Note that in the following description, sign "S" means step.

In S301, the data obtaining unit 101 first obtains time-series mesh data to be processed and its correspondence relation information. Fig. 4(a) is a schematic diagram of inputted time-series mesh data. In Fig. 4(a), laterally long rectangles 400, 410, and 420 represent sets of mesh models continuing in time series, which correspond to three types of objects "Obj.0", "Obj.1", and "Obj.2", respectively (hereinafter, referred to as "continuous mesh model").

In S302, the tracking unit 102 conducts the tracking processing on the continuous mesh model corresponding to each object based on an object ID contained in the correspondence relation information obtained together with the time-series mesh data in S301. In this way, tracked time-series mesh data and track information corresponding to this as shown in Fig. 4(b) are generated. In the example of Fig. 4(b), by the tracking processing, regarding "Obj.0", a tracked continuous mesh model 401 formed by dividing the continuous mesh model 400 into two tracks, Track0-1 and Track0-2 at a frame position b is obtained. Similarly, regarding "Obj.1", a tracked continuous mesh model 411 formed by dividing the continuous mesh model 410 into two tracks, Track1-1 and Track1-2, at a frame position d is obtained. Similarly, regarding "Obj.2", a tracked continuous mesh model 421 formed by dividing the continuous mesh model 420 into three tracks, Track2-1, Track2-2, and Track2-3, at frame positions a and c is obtained. Hence, track information which defines a relation between each of "Obj.0", "Obj.1", and "Obj.2" and each track is generated. The detail of the tracking processing executed on an object basis in the present step will be described later.

In S303, the data output unit 103 outputs the tracked time-series mesh data and the track information generated in S302. That is, time-series mesh data composed of the tracked continuous mesh model for each object and track information indicating the configuration of tracks in each tracked continuous mesh model as shown in aforementioned Fig. 4(b) are outputted.

The overview of the tracking processing according to the present embodiment is as described above.

<Detail of Tracking Processing>

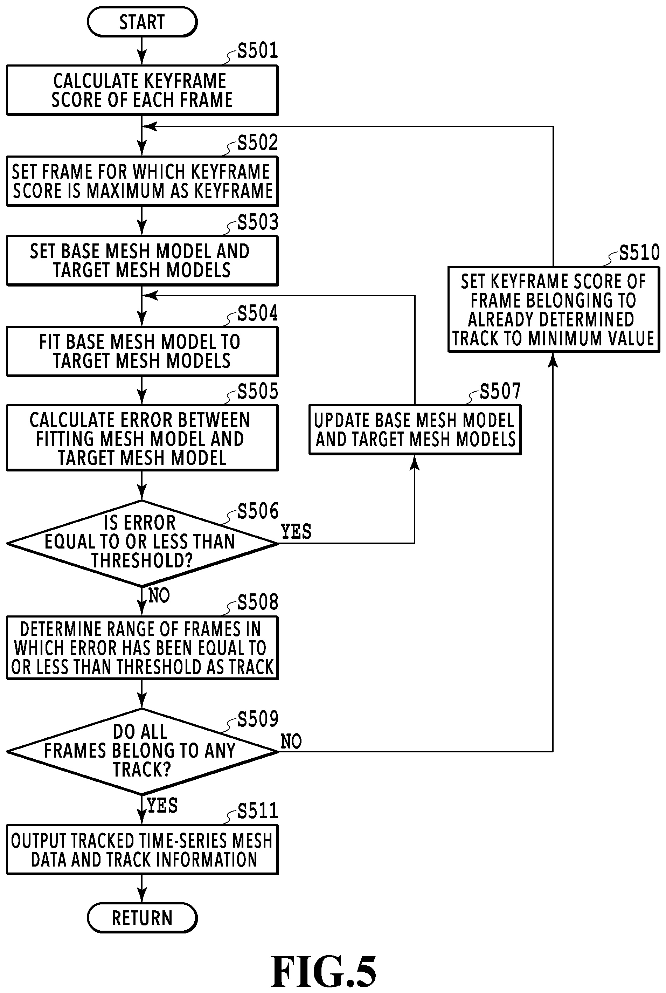

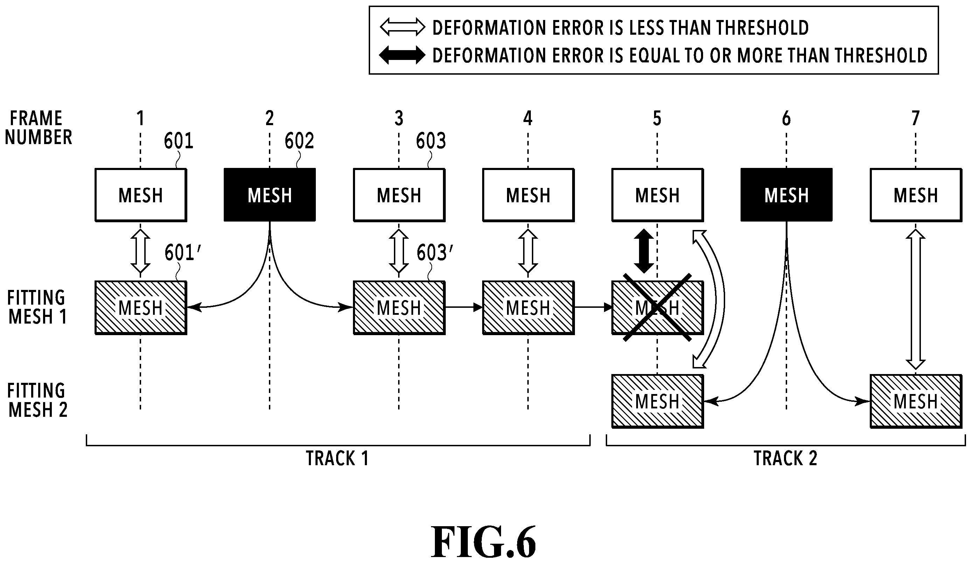

Fig. 5 is a flowchart showing a detail of the tracking processing for each object by the tracking unit 102. In addition, Fig. 6 is a schematic diagram showing how the tracking processing is applied to a continuous mesh model of a certain object. Note that in Fig. 6, a mesh model is described simply as "mesh" for convenience. Hereinafter, the description is made with reference to the flowchart of Fig. 5 and the schematic diagram of Fig. 6.

In S501, a keyframe score of each frame in the time-series mesh data obtained in S301 is calculated. Here, the keyframe score is an index representing the easiness of use of each frame as a keyframe, and the genus of topology of mesh models contained in a frame or the surface area of a mesh model can be used as an example of the keyframe. For example, the genus of topology G of mesh models can be obtained in accordance with the following equation (1).
[Math. 1]

$$G = \frac{E-V-F}{2} + 1 \qquad\qquad \text{... Equation (1)}$$

In the above-described equation (1), E represents the number of edges of a mesh model, V represents the number of vertices of the mesh model, and F represents the number of polygons of the mesh model. In addition the surface area A of a mesh model can be obtained in accordance with the following equation (2).
[Math. 2]

$$A = \sum_i^m PS_i \qquad \qquad \dots \text{Equation (2)}$$

In the above-described equation (2), $PS_i$ represents the area of a polygon i, and m represents the number of polygons of the mesh model.

In S502, a frame for which the keyframe score calculated in S501 takes the maximum value is set as a keyframe. Here, it is assumed that in the example of Fig. 6, a frame 2 is set as the keyframe.

In S503, a mesh model contained in the keyframe set in S502 is first set as a base mesh model serving as a basis for tracking. Moreover, mesh models contained in frames before and after the keyframe are respectively set as target mesh models to be subject to the tracking. Here, in the example of Fig. 6, since the frame 2 is the keyframe, a mesh model 602 contained in the frame 2 is set as a base mesh model, and mesh models 601 and 603 contained in a frame 1 and a frame 3 on both sides of frame 2 are set as target mesh models.

In S504, fitting processing of deforming the base mesh model such that the differences of the base mesh model from the surface structures of the target mesh models are reduced is conducted. In this way, a fitting mesh model is generated. For the deformation, for example, the ICP (Iterative Closest Point) method can be utilized. In the example of Fig. 6, this fitting processing generates fitting mesh models 601' and 603' which are obtained by approximating the shape of the mesh model 602 in the frame 2 to the mesh models 601 and 603 of the adjacent frame 1 and frame 3, respectively. Here, the tracking processing is conducted in both directions to the previous and next frames; however, the tracking processing may be conducted in one direction to the previous frame or the next frame.

In S505, shape errors between the target mesh models and the fitting mesh models are calculated. As the errors here, for example, the Hausdorff distance of vertices between the models can be utilized. In the example of Fig. 6, an error between the mesh model 601 and the fitting mesh model 601' and an error between the mesh model 603 and the fitting mesh model 603' are calculated.

In S506, it is determined whether or not each error calculated in S505 is equal to or less than a threshold, and processing to be executed next is selected in accordance with a result of the determination. If the error is equal to or less than the threshold, processing of S507 is executed, and if the error is higher than the threshold, processing of S508 is executed.

In S507, the base mesh model and the target mesh models are updated. Specifically, processing of setting the current target mesh model as a new base mesh model and setting a mesh model contained in a frame adjacent to the frame containing the current target mesh model as a new target mesh model is conducted. After the update, the processing returns to S504, and the same processing is repeated.

In S508, a range of frames in which the error has been equal to or less than the threshold in the processing so far is determined as one track. In the example of Fig. 6, a shape error between the target mesh model and the fitting mesh model is first calculated in the frames 1 and 3. Since this error is equal to or less than the threshold, the tracking processing is conducted on mesh models in further adjacent frames 4 and 5. As the fitting processing at this time, the following two approaches can be considered, and any of these may be applied.

<<Approach 1>>

For the frame 4, the fitting mesh model generated for the frame 3 is deformed such that the difference from the mesh model in the frame 4 is eliminated. For the frame 5, the fitting mesh model generated for the frame 4 is deformed such that the difference from the mesh model in the frame 5 is eliminated.

<<Approach 2>>

For the frame 4, the base mesh model (the mesh model in the frame 2) is deformed such that the difference from the mesh model in the frame 4 is eliminated. For the frame 5, the base mesh model (the mesh model in the frame 2) is deformed such that the difference from the mesh model in the frame 5 is eliminated.

Then, in the example of Fig. 6, since the error exceeds the threshold in the frame 5, the range from the frames 1 to 4 are determined as one track. In this way, tracked time-series mesh data having the frames 1 to 4 as a track width (track 1) is obtained.

In S509, it is determined whether or not each of all the frames of the time-series mesh data obtained in S301 belongs to any track. If all the frames belong to any track, S511 is executed. On the other hand, if there is a frame that does not belong to any track yet, S510 is executed next.

In S510, the keyframe scores of the frames belonging to an already determined track are set to the minimum value. After the setting, the processing returns to S502, and a frame for which the keyframe score takes the maximum among the remaining frames that do not belong to any track is set as a new keyframe, and the same processing is repeated. Based on the newly set keyframe in this way, a new track and tracked mesh data corresponding to the new track are obtained. In the example of Fig. 6, by setting the keyframe scores of the frames 1 to 4 already belonging to the "track 1" to the minimum value "0", the frame 6 is set as a new keyframe among the remaining frames 5 to 7. Then, a mesh model in the frame 6 is set as a base mesh model and mesh models of the previous and next frames 5 and 7 are as target mesh models, and the tracking processing is conducted. As a result, tracked mesh data having the frames 5 to 7 as a track width (track 2) is obtained.

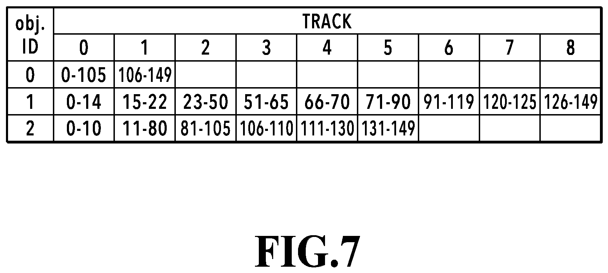

In S511, the tracked time-series mesh data obtained in the processing so far and its track information are outputted. Fig. 7 is an example of a table as track information. The track information shown in Fig. 7 shows the detail of tracks obtained by the tracking processing on time-series mesh data composed of 150 frames in total, which includes mesh models of three objects in each frame. In the table of Fig. 7, a start frame and an end frame for the tracks, which are identified by track IDs "0 to 8", are identified for each object (object IDs "0 to 2"). Note that by automatically setting the start frame or the end frame as the keyframe, it become unnecessary to manage the keyframe information. However, the keyframe information may be attached to each track as necessary.

The detail of the tracking processing for each object according to the present embodiment is as described above. By conducting such tracking processing for each object in parallel, it becomes possible to conduct the tracking processing at a higher speed on time-series shape data.

[Embodiment 2]

In the tracked time-series mesh data obtained in the method of Embodiment 1, the track length can be different for each object, and accordingly there can be a case where the positions of start frames of tracks are different between objects (see Fig. 4(b) mentioned above). For this reason, there is a problem that the method cannot be applied to a format such as MPEG-DASH, for example, which packs data of frames in a certain track width for transferring the data. In view of this, a method for obtaining tracked time-series mesh data in which the positions of start frames of tracks are aligned between objects will be described as Embodiment 2. Note that since the basic configuration of the image processing apparatus 100 is in common with Embodiment 1, the content of tracking processing which is different from Embodiment 1 will be mainly described.

<Logical Configuration of Image Processing Device>

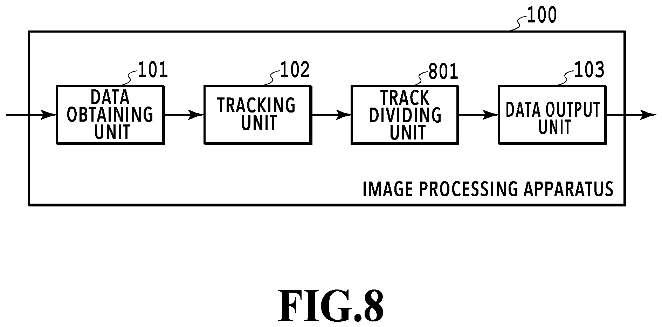

Fig. 8 is a functional block diagram showing a logical configuration (a software configuration) of an image processing apparatus according to the present embodiment. A track dividing unit 801 which is not included in the image processing apparatus 100 according to Embodiment 1 is added.

<Operation of Image Processing Device 100>

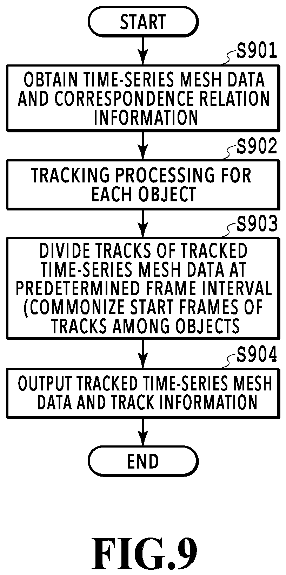

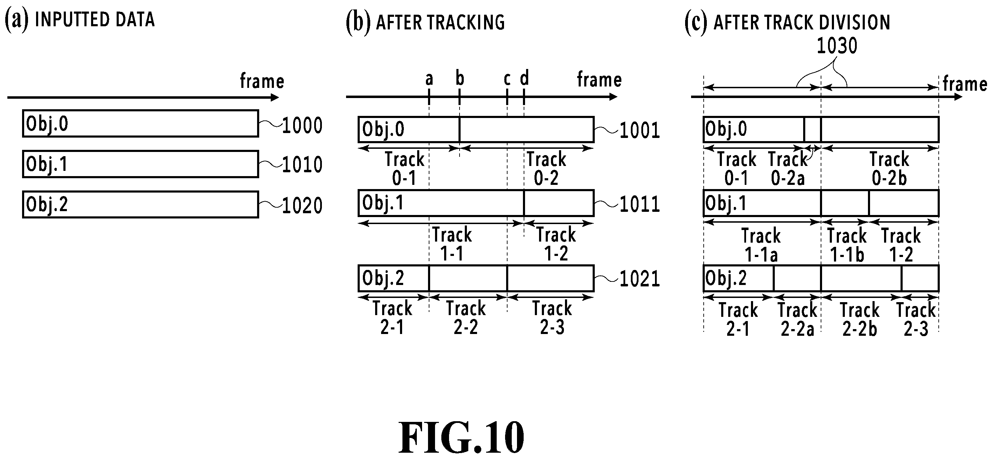

Fig. 9 is a flowchart showing a flow of the tracking processing according to the present embodiment. Figs. 10(a) to (c) are diagrams for explaining the tracking processing of the present embodiment. Hereinafter, the operation of the image processing apparatus 100 according to the present embodiment will be described with reference to Fig. 9 and Figs. 10(a) to (c). Note that in the following description, sign "S" means step.

S901 corresponds to S301 in the flow of Fig. 3 of Embodiment 1. That is, the data obtaining unit 101 first obtains time-series mesh data to be processed and its correspondence relation information. Fig. 10(a) is a schematic diagram of inputted time-series mesh data. In Fig. 10(a), laterally long rectangles 1000, 1010, and 1020 represent continuous mesh models which correspond to three objects "Obj.0", "Obj.1", and "Obj.2", respectively.

S902 corresponds to S302 in the flow of Fig. 3 of Embodiment 1. That is, the tracking unit 102 conducts the tracking processing on the continuous mesh model corresponding to each object based on object ID contained in the correspondence relation information obtained together with the time-series mesh data in S901. In this way, tracked time-series mesh data as shown in Fig. 10(b) is generated. In the example of Fig. 10(b), by the tracking processing, regarding "Obj.0", a tracked continuous mesh model 1001 formed by dividing the continuous mesh model 1000 into two tracks, Track0-1 and Track0-2 at a frame position b is obtained. Similarly, regarding "Obj.1", a tracked continuous mesh model 1011 formed by dividing the continuous mesh model 1010 into two tracks, Track1-1 and Track1-2 at a frame position d is obtained. Similarly, regarding "Obj.2", a tracked continuous mesh model 1021 formed by dividing the continuous mesh model 1020 into three tracks, Track2-1, Track2-2, and Track2-3 at frame positions a and c is obtained.

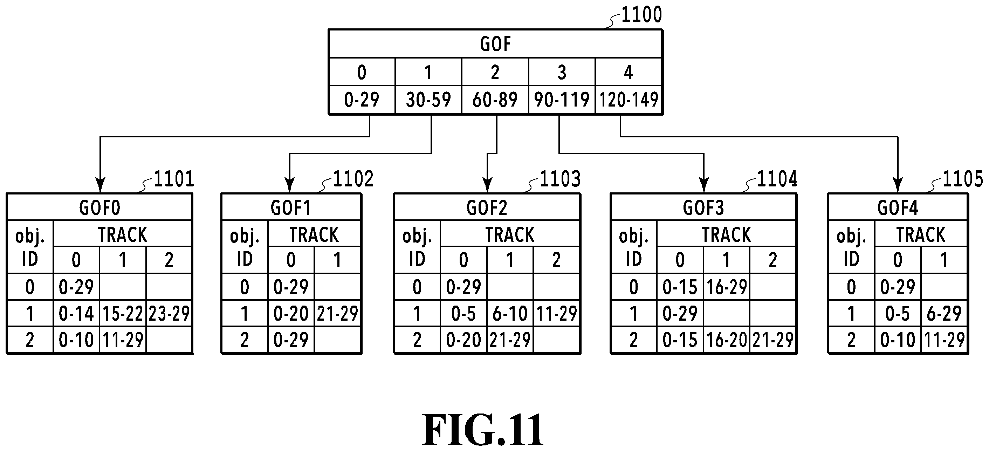

In S903, the track dividing unit 801 conducts processing of dividing tracks at a predetermined frame interval on the tracked time-series mesh data obtained in S902. In this way, new tracked time-series mesh data in which the start frames of the tracks are commonized among the objects is generated. Here, the predetermined frame interval can be set as desired. For example, in the case of delivering tracked time-series data in a format such as MPEG-DASH or similar cases, the tracks may be divided at a frame interval corresponding to a packing unit in the predetermined format (2 seconds to 10 seconds in the case of MPEG-DASH). This makes it possible to obtain tracked time-series data that is consistent with the predetermined format at the time of transfer and delivery, and its track information. Fig. 10(c) shows a result in the case where tracks in the continuous mesh models 1001, 1011, and 1021 for each object shown in Fig. 10(b) are divided at a predetermined frame interval 1030. In the example of Fig. 10(c), Track0-2 in the tracked continuous mesh model 1001 of "Obj.0" is divided into "Track0-2a" and "Track0-2b" by the track division. Similarly, Track1-1 in the tracked continuous mesh model 1011 of "Obj.1" is divided into "Track1-1a" and "Track1-1b". Similarly, Track2-2 in the tracked continuous mesh model 1021 of "Obj.2" is divided into "Track2-2a" and "Track2-2b". Fig. 11 is a diagram showing a relation between GOF (Group of Frames) and tracks in track information in the case where each track of track information shown in Fig. 7 mentioned above is divided at 30-frame interval. The GOF shown in table 1100 in Fig. 11 is a group for organizing track information for every predetermined frame interval. Here, the tracks are divided into five groups, "GOF0" to "GOF4". Here, after the division, the respective objects of "Obj.0", "Obj.1", and "Obj.2" are changed to a configuration composed of five GOFs as shown in tables 1101 to 1105 in Fig. 11. That is, by the track division, "Obj.0" is changed from a 2-track configuration to a 6-track configuration via the GOF. Similarly, "Obj.1" is changed from a 9-track configuration to 11-track configuration via the GOF. Similarly, "Obj.2" is changed from a 6-track configuration to 10-track configuration via the GOF. As is clear from the example of the track information shown in Fig. 11, it can be seen that the start frame of the leading track in each GOF is aligned among all the objects. Note that a keyframe is reset for the divided tracks. The tracking processing has already been applied to the tracks to be divided. Hence, the start frame or the end frame may be set as a keyframe, or for a track containing the keyframe set before the division, that frame may be reset as a keyframe.

In S904, the data output unit 103 outputs tracked time-series mesh data after the track division which has been obtained in S903 and its track information. The track information in this case has a data structure in which the start frames of at least one or more tracks coincide among the objects in each GOF divided at a predetermined frame interval as shown in Fig. 11. In the case of tracked time-series mesh data obtained in the present embodiment in this way, at least one or more of the start frames of the tracks are commonized among the objects, and the transition timings of the tracks coincide among the objects in a portion where the start frames are commonized. Hence, for example, in the case where the data output unit 103 of the image processing apparatus 100 functions as a distribution server, it becomes easier to create distribution data in compliance with a format that finely packs data such as MPEG-DASH.

The content of the tracking processing according to the present embodiment is as described above.

<Modification>

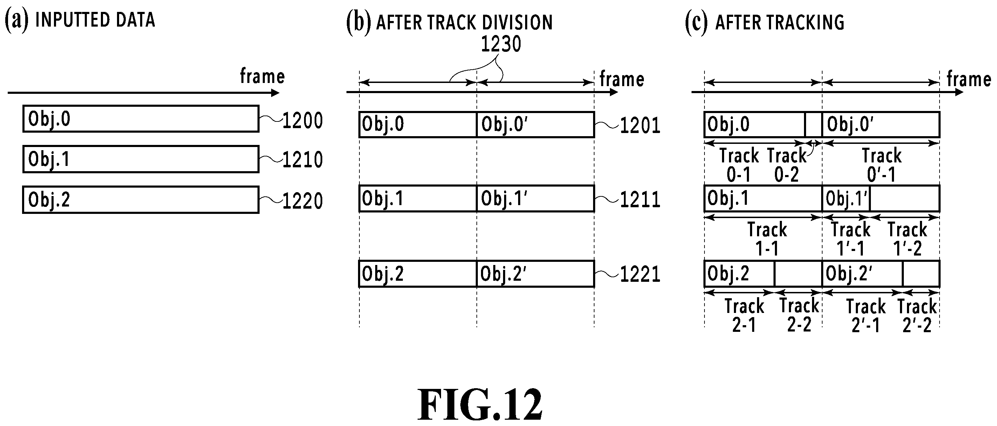

The dividing processing of tracks may be conducted before the tracking processing. Figs. 12(a) to (c) are diagrams for explaining tracking processing of the present modification. Fig. 12(a) is a diagram corresponding to Fig. 10(a) mentioned above and a schematic diagram of inputted time-series mesh data. In the present modification, a continuous mesh model for each object included in time-series mesh data to be processed is divided at a predetermined frame interval before the tracking processing, and new object IDs are allocated. Fig. 12(b) shows a continuous mesh model for each object which is obtained by dividing the time-series mesh data shown in Fig. 12(a) at a frame interval 1230 and re-allocating object IDs. By conducting the tracking processing on the continuous mesh model for each object which is newly obtained in this way, tracked time-series mesh data as shown in Fig. 12(c) can be obtained. In this way, tracked time-series mesh data and track information may be generated by first dividing tracks and then conducting the tracking processing.

As described above, according to the present embodiment, tracked time-series mesh data in which start frames of tracks are aligned among objects can be obtained. This also makes it easy to distribute tracked time-series shape data for volumetric videos in streams of general video contents.

[Embodiment 3]

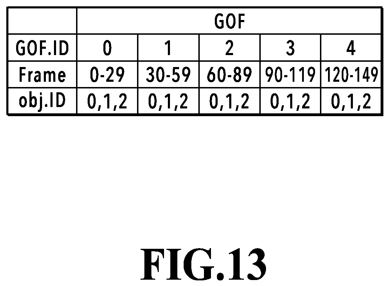

In the case of track information utilizing GOF which is obtained in Embodiment 2, the start frames of tracks other than the leading tracks in the GOF are not necessarily aligned among objects, which makes data management difficult. In view of this, as shown in Fig. 13, for example, a mode of obtaining track information having a data structure in which start frames of all tracks are aligned among objects will be described as Embodiment 3. Note that the content common among Embodiments 1 and 2 will be omitted, and differences will be mainly described below.

<Logical Configuration of Image Processing Device>

As in the case of Embodiment 2, an image processing apparatus 100 of the present embodiment also includes a track dividing unit 801. The track dividing unit 801 of the present embodiment sets start frames in all tracks of all objects in time-series mesh data after tracking processing as division candidate frames. Then, in the case where an interval between adjacent two division candidate frames is equal to or less than a predetermined number of frames, the track dividing unit 801 integrates these adjacent two division candidate frames into one. The track dividing unit 801 determine a division candidate frame which has eventually remained as a division frame, and divides the tracks. Such processing can prevent a track width after division from becoming too narrow, and improve compression efficiency.

<Operation of Image Processing Device 100>

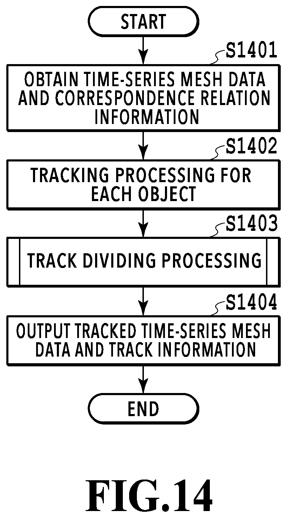

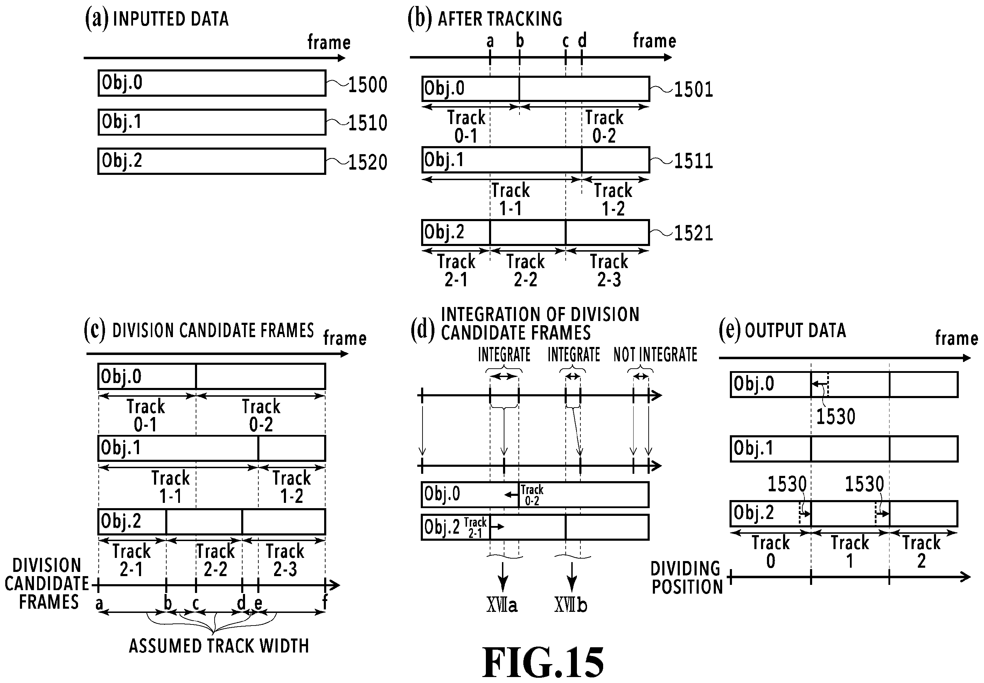

Fig. 14 is a flowchart showing a flow of tracking processing according to the present embodiment. Figs. 15(a) to (e) are diagrams for explaining the tracking processing of the present embodiment. Hereinafter, the operation of the image processing apparatus 100 according to the present embodiment will be described with reference to Fig. 14 and Figs. 15(a) to (e). Note that in the following description, sign "S" means step.

S1401 corresponds to S301 in the flow of Fig. 3 of Embodiment 1. That is, the data obtaining unit 101 first obtains time-series mesh data to be processed and its correspondence relation information. Fig. 15(a) is a schematic diagram of inputted time-series mesh data. In Fig. 15(a), laterally long rectangles 1500, 1510, and 1520 represent continuous mesh models which correspond to three types of objects "Obj.0", "Obj.1", and "Obj.2", respectively.

S1402 corresponds to S302 in the flow of Fig. 3 of Embodiment 1. That is, the tracking unit 102 conducts the tracking processing on the continuous mesh model corresponding to each object based on object ID contained in the correspondence relation information obtained together with the time-series mesh data in S1401. In this way, tracked time-series mesh data as shown in Fig. 15(b) is generated. In the example of Fig. 15(b), by the tracking processing, regarding "Obj.0", a tracked continuous mesh model 1501 formed by dividing the continuous mesh model 1500 into two tracks, Track0-1 and Track0-2 at a frame position b is obtained. Similarly, regarding "Obj.1", a tracked continuous mesh model 1511 formed by dividing the continuous mesh model 1510 into two tracks, Track1-1 and Track1-2 at a frame position d is obtained. Similarly, regarding "Obj.2", a tracked continuous mesh model 1521 formed by dividing the continuous mesh model 1520 into three tracks, Track2-1, Track2-2, and Track2-3 at frame positions a and c is obtained.

Next, in S1403, the track dividing unit 801 conducts processing of dividing tracks of each object based on the result of the tracking processing obtained in S1402. The detail of the track dividing processing will be described later.

In S1404, the data output unit 103 outputs tracked time-series mesh data in which all the tracks are commonized among the objects which is obtained in S1403 and its track information.

The overview of the tracking processing according to the present embodiment is as described above.

<Detail of Track Dividing Processing>

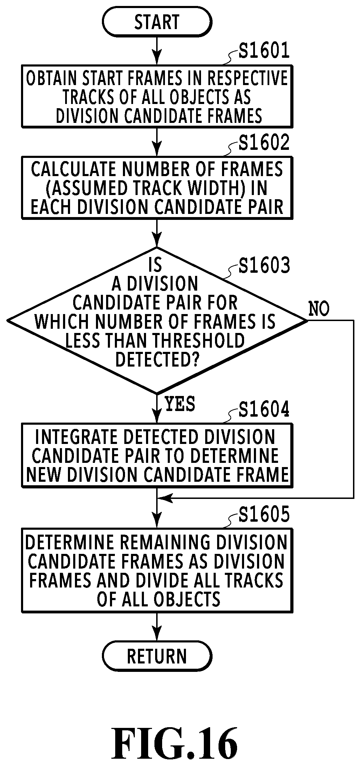

Fig. 16 is a flowchart showing the detail of the track dividing processing by the track dividing unit 801 according to the present embodiment. Hereinafter, the description will be made appropriately with reference to the flowchart of Fig. 16 and the explanatory diagrams of Figs. 15(a) to (e) mentioned above.

In S1601, start frames in the respective tracks of all objects are obtained as division candidate frames. In the example of Fig. 15(c), six division candidate frames a to f are obtained.

In S1602, the number of frames between adjacent two division candidate frames (a division candidate pair) is calculated based on the plurality of division candidate frames obtained in S1601. The number of frames calculated here is synonymous with an assumed track width in a provisional tracks corresponding to the division candidate pair for calculation.

In S1603, it is determined whether or not there is one which is less than a threshold among the numbers of frames (assumed track widths) for the respective division candidate pairs calculated in S1602. The threshold here is a value stored in the ROM 202 or the RAM 203 as a predetermined number of frames which specifies the minimum track width. If a division candidate pair for which the number of frames is less than the threshold is detected, the processing of S1604 is subsequently executed. On the other hand, if a division candidate pair for which the number of frames is less than the threshold is not detected, the processing of S1605 is subsequently executed.

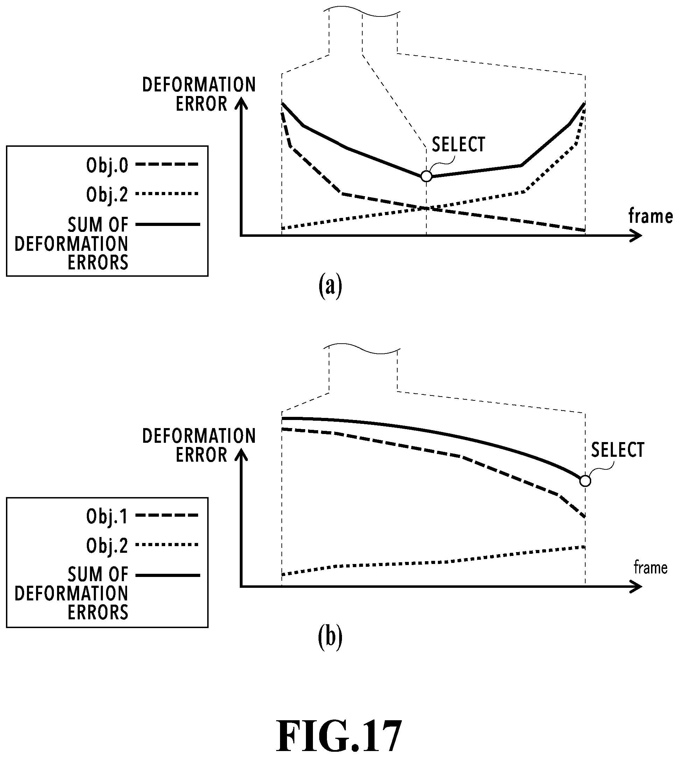

In S1604, two division candidate frames according to the division candidate pair detected in S1603 are integrated into one to determine a new division candidate frame. The integration of division candidate frames may be rephrased as the processing of selecting a specific frame from among frames between two division candidate frames for which the number of frames is less than the threshold and replacing the frame with the two division candidate frames. Fig. 15(d) is a diagram for explaining the selection of a specific frame. Here, specific frames in the integrating processing regarding two objects, "Obj.0" and "Obj.2", are selected based on the mesh models of Track0-2 of "Obj.0" and Track2-1 of "Obj.2". Specifically, tracking is conducted again on the respective mesh models of Track0-2 and Track2-1, and a deformation error at the time of the tracking is calculated, and a frame position for which the sum of deformation errors of both tracks is minimized is selected (see Fig. 17(a)). Similarly, tracking is conducted again also on the respective mesh models of Track1-2 of "Obj.1" and Track2-3 of "Obj.2". Then, the deformation errors at the time of the tracking are calculated, and a frame position for which the sum of deformation errors of both tracks is minimized are selected (see Fig. 17(b)). As the deformation errors at this time, for example, the Hausdorff distance or the like can be utilized. In this way, by integrating two division candidate frames for each of which the number of frames is less than the threshold to determine a new division candidate frame, it is possible to prevent a track the track width of which is less than the minimum track width from being generated after the track division. Then, since the integration of division candidate frames reduces the number of division candidate frames, the total number of tracks after the division is reduced, so that the compression efficiency at the time of data compression can be improved. Note that division candidate frames corresponding respectively to the positions of the leading frame and the end frame (division candidate frames a and f in the example of Fig. 15(c)) are special division candidate frames, and are not integrated even in the case where the number of frames between the adjacent division candidate frames is less than the threshold.

In S1605, the division candidate frames remaining after the processing so far are determined as division frames, all the tracks of all the objects are divided. Fig. 15(e) shows tracked time-series mesh data after the tracks are divided in accordance with division candidate frames remaining after the integration shown in Fig. 15(d). The tracked time-series mesh data obtained in this way have tracks common among all the objects (see Track0 to Track3 in Fig. 15(e)). At this time, for tracks generated by the integration of division candidate frames, mesh models in ranges indicated by arrows 1530 are replaced with fitting mesh models obtained by re-tracking in S1604. In this way, the topology of the mesh models in the frames of the tracks is commonized. Note that in the example of Fig. 15(e), the track division is not conducted on the continuous mesh model of "Obj.1", and Track1-1 and Track1-2 which are the original tracks do not change (a separating position between the tracks does not change).

The detail of the track dividing processing according to the present embodiment is as described above.

<Modification>

There is a case where a track width that is equal to or more than a certain number of frames is not suitable for a format for transfer or distribution of data. In view of this, the track division may be conducted upon setting an upper limit of the track width in advance. That is, in the case where an interval between adjacent two division candidate frames among division candidate frames remaining after the integration exceeds the upper limit of the track width, the division is not conducted on the division candidate frames. This makes it possible to obtain tracked time-series shape data suitable for a format for transfer or distribution of data and its track information.

As described above, according to the present embodiment, track information composed of only tracks having no GOF can be obtained for tracked time-series mesh data, and the data management becomes easier. In addition, since the present embodiment conducts control such that a track having a narrow track width is not generated at the time of track division, the compression efficiency for tracked time-series mesh data, which is a final product, can be improved.

[Embodiment 4]

In Embodiments 2 and 3, the tracking processing and the track dividing processing are separately conducted. Next, a mode of generating a track common among all objects in tracking processing will be described as Embodiment 4. Note that the content common among the Embodiments described above will be omitted, and differences will be mainly described below.

<Logical Configuration of Image Processing Device>

A logical configuration (a software configuration) of the image processing apparatus according to the present embodiment is the same as that of the image processing apparatus 100 according to Embodiment 1, and includes a data obtaining unit 101, a tracking unit 102, and a data output unit 103. That is, in the case of the present embodiment, the tracking unit 102 also plays a role of a track dividing unit 801.

<Operation of Image Processing Device 100>

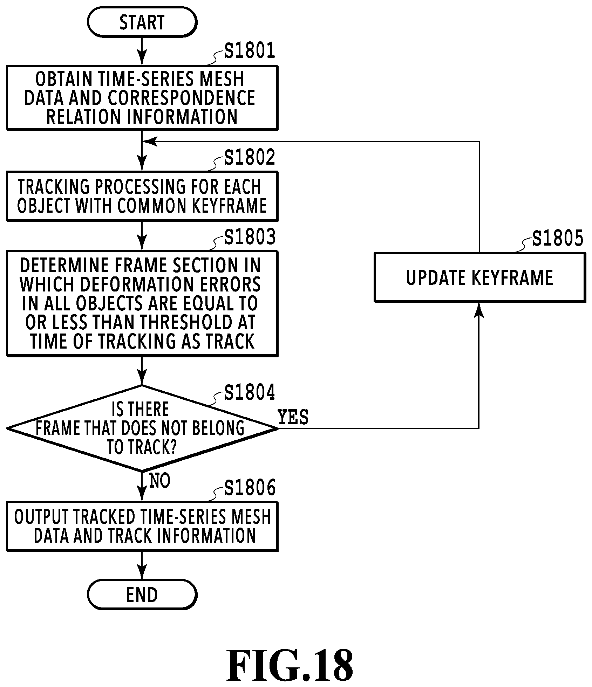

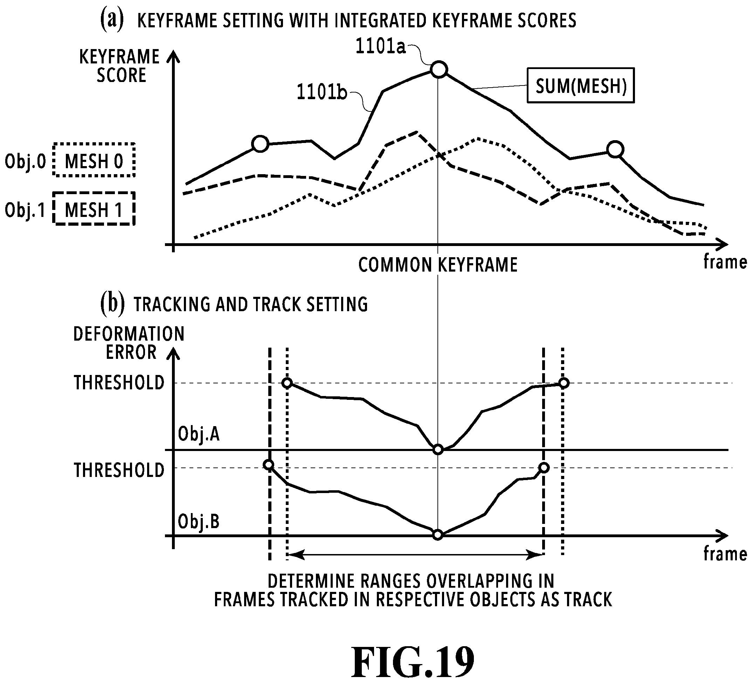

Fig. 18 is a flowchart showing a flow of tracking processing according to the present embodiment. Figs. 19(a) and (b) are diagrams for explaining the tracking processing of the present embodiment. Hereinafter, the operation of the image processing apparatus 100 according to the present embodiment will be described with reference to Fig. 18 and Figs. 19(a) and (b). Note that in the following description, sign "S" means step.

S1801 corresponds to S301 in the flow of Fig. 3 of Embodiment 1. That is, the data obtaining unit 101 first obtains time-series mesh data to be processed and its correspondence relation information.

In S1802, upon setting a keyframe common among all objects, the tracking unit 102 conducts the tracking processing on peripheral frames of the keyframe. Fig. 19(a) shows how a frame with which the sum of the keyframe scores of the respective objects is maximized is selected as the keyframe common among all the objects. A frame selected in this way is set as a common keyframe, and the tracking processing is conducted on inputted time-series mesh data. Since the tracking is started from the keyframe common among all the objects, it is expected that a track width wider than the case where tracking is started from a keyframe different for each object can be obtained.

In S1803, the tracking unit 102 determines a frame section in which deformation errors in all the objects are equal to or less than a threshold as a track based on the result of the tracking processing conducted in S1802. Fig. 19(b) is a diagram for explaining how a track is determined. As shown in Fig. 19(b), ranges which overlap in frame sections tracked in the respective objects are determined as a track.

In S1804, it is determined whether or not there is a frame that does not belong to any track. If there is a remaining frame that does not belong to any track, S1805 is executed next, while if there is no remaining frame, S1806 is executed.

In S1805, the tracking unit 102 updates the common keyframe. Specifically, the tracking unit 102 searches for a frame with which the sum of the keyframe scores of the respective objects is maximized from among a group of frames which do not belong to any track yet, and sets the frame as a new common keyframe. Once the update of the common keyframe is completed, the processing returns to S1802, and the same processing is repeated.

In S1806, the data output unit 103 outputs tracked time-series mesh data in which all the tracks are commonized among objects which is obtained in the processing so far, and its track information.

The content of the tracking processing according to the present embodiment is as described above. In this way, the same result of tracking as in Embodiment 3 can be obtained.

[Other Embodiments]

Although time-series shape data in the mesh format is to be inputted and outputted in Embodiments 1 to 4, another expression format such as a point cloud format may be employed in the same manner. For example, in the case where time-series point cloud data is to be inputted and outputted, the total number of vertices of each surface point cloud or the like may be utilized in calculation of a keyframe score. Note that there is a case where each vertex of a point cloud model for each object contained in time-series point cloud data has normal information, color information, transparency information, or information obtained by combining two or more of these.

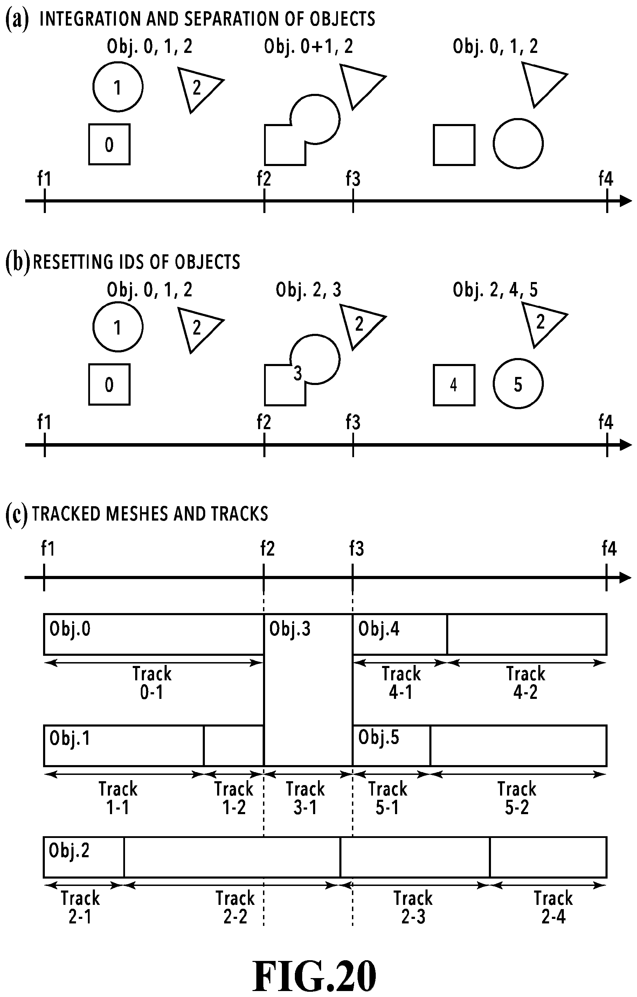

In addition, even in the case where the number of meshes increases or decreases in a continuous mesh model for each object contained in inputted time-series shape data, the approaches of Embodiments 1 to 4 can be applied. An increase or decrease of the number of meshes is caused by contact or separation of objects. Hereinafter, the processing in the case where there is an increase or decrease of the number of meshes will be described with reference to Figs. 20(a) to (c). Here, the case where three objects (Obj.0, Obj.1, and Obj.2) are present, and Obj.0 and Obj.1 come into contact with each other at a frame f2, and separate from each other at a frame f3 as shown in Fig. 20(a) is considered. First, the tracking unit 102 resets different object IDs for objects which have come into contact with each other or separated from each other as shown in Fig. 20(b). This allows processing to be conducted without considering an influence of a change in the number of objects in the tracking processing. Then, the tracking unit 102 conducts the tracking processing for each object to generate tracked time-series mesh data and its track information as shown in Fig. 20(c). Then, in generating track information, by dividing tracks and GOFs in the frames f2 and f3 in which the objects have come into contact with each other or separated from each other, a simple data structure in which the number of objects does not change in tracks can be maintained.

The present disclosure can be achieved by processing in which a program which achieves one or more functions of the above-mentioned Embodiments is supplied to a system or a device via a network or a storage medium, and one or more processors in a computer of the system or the device read and execute the program. In addition, the present disclosure can be achieved by a circuit (for example, ASIC) which achieves one or more functions.

Although the present invention has been described with reference to Embodiments, it goes without saying that the present invention is not limited to the above-mentioned Embodiments. The scope of the following claims is to be accorded the broadest interpretation to encompass all such modifications and equivalent structures and functions.

This application claims the benefit of priority based on Japanese Patent Application No. 2022-184165 filed November 17, 2022, and this Japanese Patent Application is incorporated by reference in the present description.

**Claims**

1. An image processing apparatus comprising:

   an obtaining unit adapted to obtain time-series shape data composed of a frame group in which each of frames contains 3D models representing three-dimensional shapes of a plurality of objects, respectively;

a tracking unit adapted to conduct tracking processing on the time-series shape data for each object based on correspondence relation information contained in the time-series shape data; and

an output unit adapted to output tracked time-series shape data processed by the tracking unit while adding metadata to the tracked time-series shape data, wherein

the correspondence relation information is identification information with which an object associated with the 3D model in each frame can be identified, and

the metadata is data in which a track indicating a frame section in which a component of the 3D model is tracked between frames in the tracked time-series shape data and the identification information of the object are associated with each other.

2. The image processing apparatus according to claim 1, wherein in the tracked time-series shape data, start frames of the tracks are commonized among the objects.

3. The image processing apparatus according to claim 2, wherein the tracked time-series shape data in which the start frames of the tracks are commonized among the objects is generated by dividing tracks obtained by the tracking processing for each object at a predetermined frame interval.

4. The image processing apparatus according to claim 2, wherein the tracking unit commonizes the start frames of the tracks among the objects by dividing the time-series shape data obtained by the obtaining unit at a predetermined frame interval, allocating the identification information that is new to the time-series shape data thus divided, and conducting the tracking processing on the time-series shape data to which the new identification information is allocated for each object.

5. The image processing apparatus according to claim 3 or 4, wherein the predetermined frame interval can be set by a user as desired.

6. The image processing apparatus according to claim 3 or 4, wherein the predetermined frame interval is a frame interval corresponding to a packing unit in a format in a case of distributing the tracked time-series shape data.

7. The image processing apparatus according to claim 1, wherein in the tracked time-series shape data, start frames of all tracks obtained by the tracking processing for each object are commonized among the objects.

8. The image processing apparatus according to claim 7, further comprising a dividing unit adapted to set start frames in all the tracks obtained by the tracking processing for each object as candidates for start frames in tracks common among all the objects, in a case where an interval between adjacent two candidates is equal to or less than a predetermined number of frames, integrates the adjacent two candidates into one, and divides all the tracks at frame positions of candidates remaining after the integration to generate tracked time-series shape data in which the start frames of all the tracks are commonized among the objects.

9. The image processing apparatus according to claim 8, wherein the dividing unit conducts the tracking processing again on 3D models of frame groups contained in two tracks to which the adjacent two candidates belong, respectively, and conducts the integration by determining a frame position for which a sum of deformation errors in the tracking processing is minimized.

10. The image processing apparatus according to claim 8 or 9, wherein in a case where an interval between adjacent two candidates among the candidates remaining after the integration exceeds an upper limit of a track width, the dividing unit does not divide the tracks at frame positions of the two candidates.

11. The image processing apparatus according to claim 1, wherein the tracking unit sets a keyframe common among all the objects, and conducts the tracking processing on peripheral frames of the keyframe for each object to generate tracks commonized among the objects.

12. The image processing apparatus according to claim 3, wherein in a case where a frame in which objects come into contact with each other or separate from each other is contained in tracks obtained by conducting the tracking processing for each object, the tracking unit divides tracks for all the objects at a position of the frame.

13. The image processing apparatus according to claim 1, wherein the 3D models are in either a mesh format or a point cloud format.

**14.** An image processing method comprising the steps of:

obtaining time-series shape data composed of a frame group in which each of frames contains 3D models representing three-dimensional shapes of a plurality of objects, respectively;

conducting tracking processing on the time-series shape data for each object based on correspondence relation information contained in the time-series shape data; and

outputting tracked time-series shape data processed by the tracking processing while adding metadata to the tracked time-series shape data, wherein

the correspondence relation information is identification information with which an object associated with the 3D model in each frame can be identified, and

the metadata is data in which a track indicating a frame section in which a component of the 3D model is tracked between frames in the tracked time-series shape data and the identification information of the object are associated with each other.

**15.** A program for causing a computer to perform the image processing method according to claim 14.

100

101

DATA OBTAINING UNIT

102

TRACKING UNIT

103

DATA OUTPUT UNIT

IMAGE PROCESSING APPARATUS

# FIG.1

**FIG.2**

START

S301

OBTAIN TIME-SERIES MESH DATA
AND CORRESPONDENCE RELATION
INFORMATION

S302

TRACKING PROCESSING FOR
EACH OBJECT

S303

OUTPUT TRACKED TIME-SERIES MESH
DATA AND TRACK INFORMATION

END

# FIG.3

(a) INPUTTED DATA

frame

| Obj.0 | ~400 |

| Obj.1 | ~410 |

| Obj.2 | ~420 |

(b) AFTER TRACKING

a  b    c d    frame

| Obj.0 | ~401 |

Track
0-1

Track
0-2

| Obj.1 | ~411 |

Track
1-1

Track
1-2

| Obj.2 | ~421 |

Track
2-1

Track
2-2

Track
2-3

# FIG.4

START

CALCULATE KEYFRAME
SCORE OF EACH FRAME
S501

SET FRAME FOR WHICH KEYFRAME
SCORE IS MAXIMUM AS KEYFRAME
S502

SET BASE MESH MODEL AND
TARGET MESH MODELS
S503

FIT BASE MESH MODEL TO
TARGET MESH MODELS
S504

CALCULATE ERROR BETWEEN
FITTING MESH MODEL AND
TARGET MESH MODEL
S505

UPDATE BASE MESH MODEL
AND TARGET MESH MODELS
S507

SET KEYFRAME SCORE OF
FRAME BELONGING TO
ALREADY DETERMINED
TRACK TO MINIMUM VALUE
S510

IS ERROR
EQUAL TO OR LESS THAN
THRESHOLD?
S506
YES

NO

DETERMINE RANGE OF FRAMES IN
WHICH ERROR HAS BEEN EQUAL TO
OR LESS THAN THRESHOLD AS TRACK
S508

DO ALL
FRAMES BELONG TO ANY
TRACK?
S509
NO

YES

OUTPUT TRACKED TIME-SERIES MESH
DATA AND TRACK INFORMATION
S511

RETURN

# FIG.5

| | DEFORMATION ERROR IS LESS THAN THRESHOLD |
|---|---|
| | DEFORMATION ERROR IS EQUAL TO OR MORE THAN THRESHOLD |

FRAME NUMBER

1    2    3    4    5    6    7

601    602    603

MESH    MESH    MESH    MESH    MESH    MESH    MESH

601'    603'

FITTING MESH 1

MESH    MESH    MESH    MESH

FITTING MESH 2

MESH    MESH

TRACK 1    TRACK 2

**FIG.6**

| obj. ID | TRACK | | | | | | | | |
|---|---|---|---|---|---|---|---|---|---|
| | 0 | 1 | 2 | 3 | 4 | 5 | 6 | 7 | 8 |
| 0 | 0-105 | 106-149 | | | | | | | |
| 1 | 0-14 | 15-22 | 23-50 | 51-65 | 66-70 | 71-90 | 91-119 | 120-125 | 126-149 |
| 2 | 0-10 | 11-80 | 81-105 | 106-110 | 111-130 | 131-149 | | | |

# FIG.7

**FIG.8**

START

⌐S901

OBTAIN TIME-SERIES MESH DATA
AND CORRESPONDENCE RELATION
INFORMATION

⌐S902

TRACKING PROCESSING FOR
EACH OBJECT

⌐S903

DIVIDE TRACKS OF TRACKED
TIME-SERIES MESH DATA AT
PREDETERMINED FRAME INTERVAL
(COMMONIZE START FRAMES OF
TRACKS AMONG OBJECTS

⌐S904

OUTPUT TRACKED TIME-SERIES MESH
DATA AND TRACK INFORMATION

END

# FIG.9

EP 4 621 719 A1

(a) INPUTTED DATA

frame

| Obj.0 | ~1000 |

| Obj.1 | ~1010 |

| Obj.2 | ~1020 |

(b) AFTER TRACKING

a  b      c d       frame

Obj.0                    ~1001

Track      Track
0-1        0-2

Obj.1                    ~1011

Track          Track
1-1            1-2

Obj.2                    ~1021

Track    Track     Track
2-1      2-2       2-3

(c) AFTER TRACK DIVISION

1030

frame

Obj.0

Track   Track        Track
0-1     0-2a         0-2b

Obj.1

Track          Track   Track
1-1a           1-1b    1-2

Obj.2

Track  Track   Track   Track
2-1    2-2a    2-2b    2-3

# FIG.10

FIG.11

**(a)** INPUTTED DATA

**(b)** AFTER TRACK DIVISION
1230

**(c)** AFTER TRACKING

FIG.12

EP 4 621 719 A1

| GOF.ID | GOF | | | | |
|--------|-----|-----|-----|-----|-----|
| | 0 | 1 | 2 | 3 | 4 |
| Frame | 0-29 | 30-59 | 60-89 | 90-119 | 120-149 |
| obj.ID | 0,1,2 | 0,1,2 | 0,1,2 | 0,1,2 | 0,1,2 |

# FIG.13

```
        ┌──────────┐
        │  START   │
        └──────────┘
              │           ╭S1401
              ▼
┌────────────────────────────────┐
│  OBTAIN TIME-SERIES MESH DATA   │
│  AND CORRESPONDENCE RELATION    │
│         INFORMATION             │
└────────────────────────────────┘
              │           ╭S1402
              ▼
┌────────────────────────────────┐
│    TRACKING PROCESSING FOR      │
│         EACH OBJECT             │
└────────────────────────────────┘
              │           ╭S1403
              ▼
┌────────────────────────────────┐
│││ TRACK DIVIDING PROCESSING  │││
└────────────────────────────────┘
              │           ╭S1404
              ▼
┌────────────────────────────────┐
│ OUTPUT TRACKED TIME-SERIES MESH │
│  DATA AND TRACK INFORMATION     │
└────────────────────────────────┘
              │
              ▼
        ┌──────────┐
        │   END    │
        └──────────┘
```

# FIG.14

(a) INPUTTED DATA

(b) AFTER TRACKING

(c) DIVISION CANDIDATE FRAMES

(d) INTEGRATION OF DIVISION CANDIDATE FRAMES

(e) OUTPUT DATA

FIG.15

START

OBTAIN START FRAMES IN RESPECTIVE
TRACKS OF ALL OBJECTS AS
DIVISION CANDIDATE FRAMES
— S1601

CALCULATE NUMBER OF FRAMES
(ASSUMED TRACK WIDTH) IN
EACH DIVISION CANDIDATE PAIR
— S1602

IS
A DIVISION
CANDIDATE PAIR FOR
WHICH NUMBER OF FRAMES IS
LESS THAN THRESHOLD
DETECTED?
— S1603

NO

YES

INTEGRATE DETECTED DIVISION
CANDIDATE PAIR TO DETERMINE
NEW DIVISION CANDIDATE FRAME
— S1604

DETERMINE REMAINING DIVISION
CANDIDATE FRAMES AS DIVISION
FRAMES AND DIVIDE ALL TRACKS
OF ALL OBJECTS
— S1605

RETURN

# FIG.16

DEFORMATION
ERROR

Obj.0 ------
Obj.2 ············
SUM OF
DEFORMATION
ERRORS

SELECT

frame

(a)

DEFORMATION
ERROR

Obj.1 ------
Obj.2 ············
SUM OF
DEFORMATION
ERRORS

SELECT

frame

(b)

# FIG.17

START

S1801

OBTAIN TIME-SERIES MESH
DATA AND CORRESPONDENCE
RELATION INFORMATION

S1802

TRACKING PROCESSING FOR EACH
OBJECT WITH COMMON KEYFRAME

S1803

DETERMINE FRAME SECTION IN
WHICH DEFORMATION ERRORS
IN ALL OBJECTS ARE EQUAL TO
OR LESS THAN THRESHOLD AT
TIME OF TRACKING AS TRACK

S1804

IS THERE
FRAME THAT DOES NOT BELONG
TO TRACK?

YES

S1805

UPDATE KEYFRAME

NO

S1806

OUTPUT TRACKED TIME-SERIES MESH
DATA AND TRACK INFORMATION

END

**FIG.18**

(a) KEYFRAME SETTING WITH INTEGRATED KEYFRAME SCORES

KEYFRAME
SCORE

1101a

1101b

SUM(MESH)

Obj.0 : MESH 0 :

Obj.1 : MESH 1 :

COMMON KEYFRAME

frame

(b) TRACKING AND TRACK SETTING

DEFORMATION
ERROR

THRESHOLD

Obj.A

THRESHOLD

Obj.B

frame

DETERMINE RANGES OVERLAPPING IN
FRAMES TRACKED IN RESPECTIVE OBJECTS AS TRACK

# FIG.19

(a) INTEGRATION AND SEPARATION OF OBJECTS

Obj. 0, 1, 2          Obj. 0+1, 2          Obj. 0, 1, 2

f1                    f2        f3                    f4

(b) RESETTING IDS OF OBJECTS

Obj. 0, 1, 2          Obj. 2, 3          Obj. 2, 4, 5

f1                    f2        f3                    f4

(c) TRACKED MESHES AND TRACKS

f1                    f2        f3                    f4

| Obj.0 | | Obj.3 | Obj.4 | |
|---|---|---|---|---|

Track 0-1                                Track 4-1          Track 4-2

| Obj.1 | | | Obj.5 | |

Track 1-1          Track 1-2    Track 3-1    Track 5-1          Track 5-2

| Obj.2 | | | |

Track 2-1          Track 2-2          Track 2-3          Track 2-4

**FIG.20**

## INTERNATIONAL SEARCH REPORT

| International application No. |
|---|
| **PCT/JP2023/034987** |

**A. CLASSIFICATION OF SUBJECT MATTER**

***G06T 13/20***(2011.01)i; ***G06T 13/40***(2011.01)i; ***G06T 17/20***(2006.01)i
FI:  G06T13/20; G06T17/20; G06T13/40

According to International Patent Classification (IPC) or to both national classification and IPC

**B. FIELDS SEARCHED**

Minimum documentation searched (classification system followed by classification symbols)

G06T13/20; G06T13/40; G06T17/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-36288 A (CANON KK) 07 March 2019 (2019-03-07) paragraphs [0010]-[0034], fig. 1-6 | 1, 13-15 |
| A | | 2-12 |
| Y | JP 2021-72545 A (CANON KK) 06 May 2021 (2021-05-06) paragraphs [0026]-[0041], fig. 6 | 1, 13-15 |
| A | | 2–12 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/034987**

| Patent document cited in search report | | | Publication date (day/month/year) | Patent family member(s) | Publication date (day/month/year) |
|---|---|---|---|---|---|
| JP | 2019-36288 | A | 07 March 2019 | US 2019/0051045 A1 paragraphs [0017]-[0041], fig. 1-6 | |
| JP | 2021-72545 | A | 06 May 2021 | (Family: none) | |

Form PCT/ISA/210 (patent family annex) (January 2015)

**EP 4 621 719 A1**

REFERENCES CITED IN THE DESCRIPTION

**Patent documents cited in the description**

- JP 2019036288 A
- US 20170024930 A

- JP 2022184165 A